# EUROPEAN PATENT APPLICATION

(11) **EP 4 471 655 A1**
(43) Date of publication of application: **04.12.2024**
(21) Application number: 24179141.7
(22) Date of filing: 30.05.2024
(51) Int. Cl.: G06F 30/392, G06F 115/02

(54) **DESIGN METHOD AND TOOL FOR AUTOMATED PLACEMENT CONSTRAINT GENERATION**

(30) Priority: 30.05.2023 US 202363469546 P
(71) Applicant: Arteris, Inc, Campbell, CA 95008 (US)
(72) Inventor: CHARIF, Amir, Paris (FR); VAN RUYMBEKE, Xavier, Clamart (FR); BRIGHT, Devin, Fox River Grove (IL)
(74) Representative: Barker Brettell LLP

(57) **Abstract**

A method for guiding physical generation of a network-on-chip (NoC), comprising: receiving a floorplan with blockage areas and unblocked areas; generating a plurality of regions within the unblocked areas; receiving list of units that are to be constrained to a first region selected from the plurality of regions; merging the first region to capture at least a portion of nearby regions of the plurality of regions that overlap with the first region to produce an optimized first region; splitting the optimized first region into smaller regions that meet a threshold region size to contain required unit and reduce congestion; and providing a final region with utilization data that is optimized for the final region.

## Description

### TECHNICAL FIELD

The present technology is in the field of electronic system design and, more specifically, related to physical implementation guidance for a fast, incremental process for automatically generating placement constraints for network elements, inserting various adapters along the segments of, and capturing wire congestion interactively while editing of a network-on-chip (NoC) topology within a floorplan.

### BACKGROUND

Multiprocessor systems have been implemented in systems-on-chips (SoCs) that communicate through NoCs. The SoCs include instances of initiator intellectual properties (IPs) and target IPs. Transactions, in the form of packets, are sent from an initiator to one or more targets using industry-standard protocols. The initiator, connected to the NoC, sends a request transaction to a target, using an address to select the target. The NoC decodes the address and transports the request from the initiator to the target. The target handles the transaction and sends a response transaction, which is transported back by the NoC to the initiator.

For a given set of performance requirements, such as connectivity and latency between source and destination, frequency of the various elements, maximum area available for the NoC logic and its associated routing (wiring), minimum throughput between sources and destinations, power consumption requirements for the NoC, and position on the floorplan of elements attached to the NoC, it is a complex task to create an optimal NoC that fulfills all the requirements with a minimum amount of logic and wires. This is typically the job of the chip architect or chip designer to create this optimal NoC, and this is a difficult and time-consuming task. In addition to this being a difficult task, the design of the NoC is revised every time one of the requirements changes, such as modifications of the chip floorplan, addition or deletion of IP components, or modification of the expected performance. As a result, this task needs to be redone frequently over the design time of the chip using any tool.

Consider a design tool used to edit a NoC topology on a floorplan that can exports the result as RTL code. Once the user have finalized the topology and are satisfied with the current placement, they are ready to export their work, and feed it into a backend tool, that can generate a netlist, perform the final Place & Route, etc. The problem is that if the place & route of the backend tool yields a completely different result from the placement produced by the user, then many optimizations and configurations become invalid. For example, if pipes were added by the user to close timing over certain distances, then those may no longer be valid if the placement has changed drastically. Additionally, once the topology is optimized according to physical constraints (floorplan space), there remains the issue of timing closure.

Therefore, what is needed is a design tool that automatically generate constraints for the placement of network elements. The constraints can be understood by the backend tools. The backend tools follow the constraints to place network units close to what is expected by the user. Moreover, constraining the placement within given bounds results in faster runtimes in the backend tools. Further, what is needed is a tool that automatically inserts additional elements into the topology to help with timing closure in backend or downstream tools. Additionally, what is also needed is a tool that provides real-time feedback on wire congestion to the user during editing. This allows the user to alter the placement and optimize the topology early on, which is highly valuable.

### SUMMARY

In accordance with various embodiments and aspects of the invention, a design tool is disclosed that automatically generates constraints for the placement of network elements, which can be understood by the backend tools that follow the constraints, in a floorplan. The design tool also constrains the placement within given bounds results in faster runtimes in the backend tools. Further, the tool automatically inserts additional elements into the topology to help with timing closure in downstream or backend tools. Additionally, the tool provides real-time feedback on wire congestion to the user during editing.

### BRIEF DESCRIPTION OF THE DRAWINGS

FIG. 1 shows a tool's screen shot that includes a floorplan and data field entry windows in accordance with various aspects and embodiments of the invention.
FIG. 2 shows the tool of FIG. 1 in accordance with various aspects and embodiments of the invention.
FIG. 3 shows a process for optimizing a floorplan using the tool in accordance with various aspects and embodiments of the invention.
FIG. 4 shows the process used by the tool of FIG. 3 with further optimization in accordance with the various aspects and embodiments of the invention.
FIG. 5 shows a tool's automatic generation of regions and merging of regions in accordance with the various aspects and embodiments of the invention.
Fig. 6 shows a tool for generating complex shaped polygon regions without overlapping blockage in accordance with the various aspects and embodiments of the invention.
FIG. 7 shows a tool using clock adapters, distance pipelines, and routing links in accordance with the various aspects and embodiments of the invention.
FIG. 8 shows a process for generation and placement of network-on-chip (NoC) in a floorplan using optimized regions in accordance with the various aspects and embodiments of the invention.

### DETAILED DESCRIPTION

The following describes various examples of the present technology that illustrate various aspects and embodiments of the invention. Generally, examples can use the described aspects in any combination. All statements herein reciting principles, aspects, and embodiments as well as specific examples thereof, are intended to encompass both structural and functional equivalents thereof. Additionally, it is intended that such equivalents include both currently known equivalents and equivalents developed in the future, i.e., any elements developed that perform the same function, regardless of structure.

It is noted that, as used herein, the singular forms "a," "an" and "the" include plural referents unless the context clearly dictates otherwise. Reference throughout this specification to "one aspect," "an aspect," "certain aspects," "various aspects," or similar language means that a particular aspect, feature, structure, or characteristic described in connection with any embodiment is included in at least one embodiment of the invention.

Appearances of the phrases "in one embodiment," "in at least one embodiment," "in an embodiment," "in certain embodiments," and similar language throughout this specification may, but do not necessarily, all refer to the same embodiment or similar embodiments. Furthermore, aspects and embodiments of the invention described herein are merely exemplary, and should not be construed as limiting the scope or spirit of the invention as appreciated by those of ordinary skill in the art. The disclosed invention is effectively made or used in any embodiment that includes any novel aspect described herein. All statements herein reciting principles, aspects, and embodiments of the invention are intended to encompass both structural and functional equivalents thereof. It is intended that such equivalents include both currently known equivalents and equivalents developed in the future.

As used herein, a transaction may be a request transaction or a response transaction. Examples of request transactions include write request and read request.

As used herein, a node is defined as a distribution point or a communication endpoint that is capable of creating, receiving, and/or transmitting information over a communication path or channel. A node may refer to any one of the following: switches, splitters, mergers, buffers, and adapters. As used herein, splitters and mergers are switches; not all switches are splitters or mergers. As used herein and in accordance with the various aspects and embodiments of the invention, the term "splitter" describes a switch that has a single ingress port and multiple egress ports. As used herein and in accordance with the various aspects and embodiments of the invention, the term "merger" describes a switch that has a single egress port and multiple ingress ports.

In accordance with the various aspects of the invention, a system-on-chip (SoC) includes multiple clock domains and multiple power domains. A clock domain is defined by all the logic fed by a given clock input. The clock input is characterized by the frequency of the clock, which is its most important parameter. A power domain is defined by all the logic getting power supply from the same power source. In accordance with the various aspects of the invention, the power source is gated, thus, the power domain can be on or off or isolated from other power domains. As such, the designer provides the set of clock domain and power domain constraints as part of the initial design.

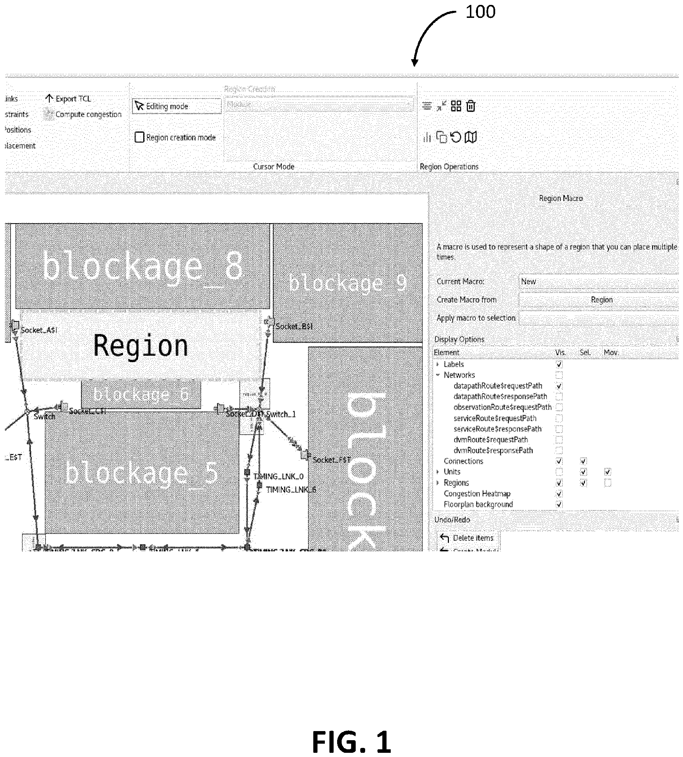

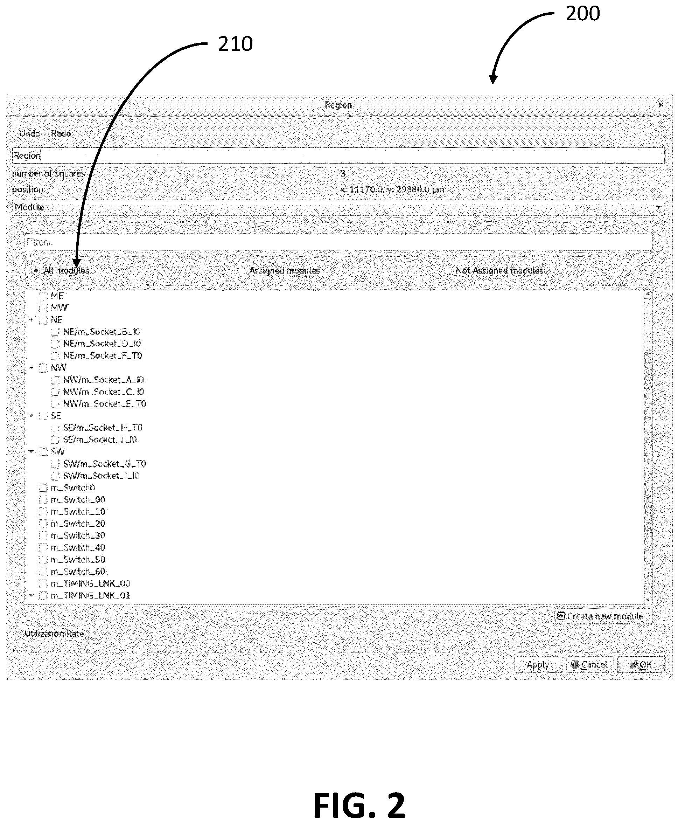

Referring now to FIG. 1 and FIG. 2, screen shots 100 and 200 of graphical user interface or display interface of a design tool are shown in accordance with the various aspects and embodiments of the invention. The screen shot 100 displays a floorplan. The screen shot 200 displays a list of modules. The tool creates regions in the available space of the floorplan. In accordance with various aspects and embodiments of the invention, the user can, manually, graphically draw a region on the floorplan. In accordance with various aspects and embodiments of the invention, the user can create a region using a command line interface. In accordance with various aspects and embodiments of the invention, the tool can automatically generate new regions, based on a user-provided size. In accordance with various aspects of the invention, the tool includes a machine learning model that is trained to provide or generate new regions. The machine learning model then receives feedback from the user based on the generated new regions and the feedback is used to further train the model.

In accordance with various aspects of the invention, the user selects the network elements (for example unit or modules) that are to be constrained within the region that has been identified. The tool may offer multiple ways to easily select the units (by element type, by network, by regular expression, etc.). The user assigns existing modules 210 to a region manually, by selecting a region and designating the modules to constrain from a list. In accordance with various aspects and embodiments of the invention, for each of the designated units, the tool automatically assigns the unit to a new module and constrains the module to be in the region that covers the unit's current position. In accordance with various aspects and embodiments of the invention, if multiple such regions exist, the user may configure which of the regions is to be used to constrain the unit. The tool automatically removes unused regions, which are regions that were not used to constrain any units, in order to clean up and optimize the final design. The tool then exports the final constraints to a format that is understood by the backend tool.

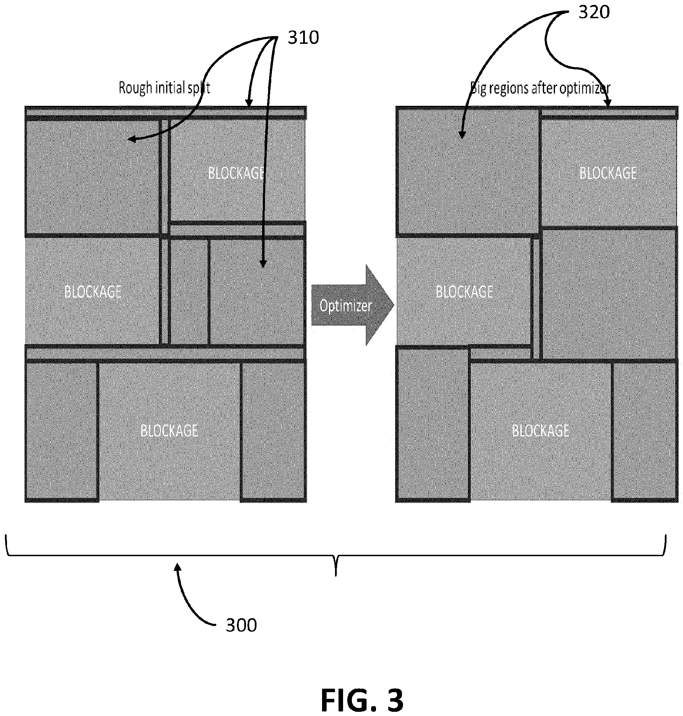

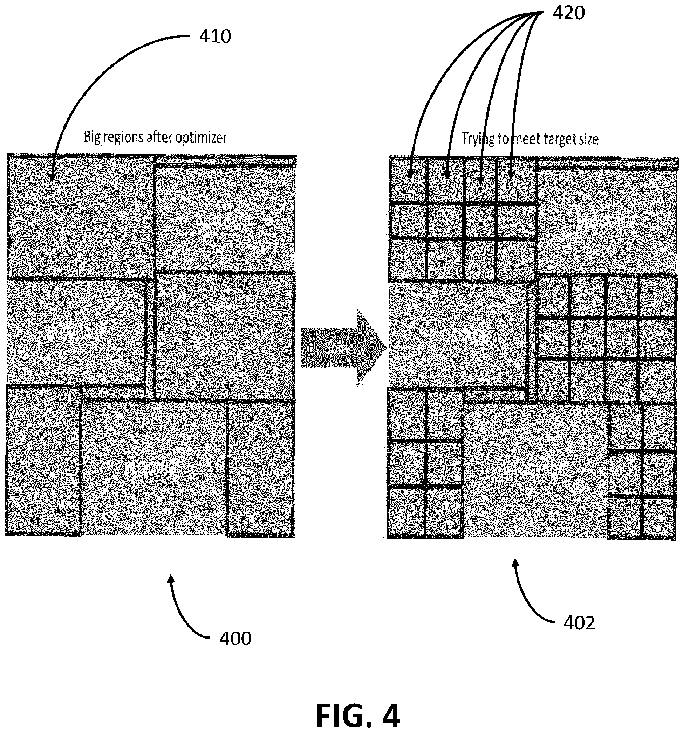

Referring now to FIG. 3 and FIG. 4, floorplan optimization 300 and 400 are shown using the tool in accordance with various aspects and embodiments of the invention. The tool automatically generates regions 310. In accordance with various aspects of the invention, the tool is unit-centric optimization. The tool's machine learning model creates regions where needed. The regions may overlap each other. The tool starts from the list of current network unit positions. The tool detects clusters of close-by units. For each cluster, the tool creates a region using the user-defined size, which covers the units.

In accordance with various aspects of the invention, the tool uses a mode that performs/produces a global optimized grid. The tool organizes regions inside the available floorplan space into a global grid of rectangular regions 320. By construction, regions do not overlap each other. The tool generates the grid using a set of steps to combine regions. The tool generates initial rectangular regions based on the available space of the floorplan. Referring to FIG. 3, the tool globally and iteratively optimizes the initial split by growing regions towards their neighbors and consuming some of their space, regions with no space left are discarded. In accordance with various aspects and embodiments of the invention, the tool can use a genetic algorithm. In accordance with various aspects and embodiments of the invention, the optimization target is to obtain regions that are as big as possible and as square as possible.

Referring to FIG. 4, the optimized floorplan 400 and the target sized floorplan 402 are shown. The tool splits the large regions, such as region 410, into smaller regions 420 based on the user-provided (preferred) target size.

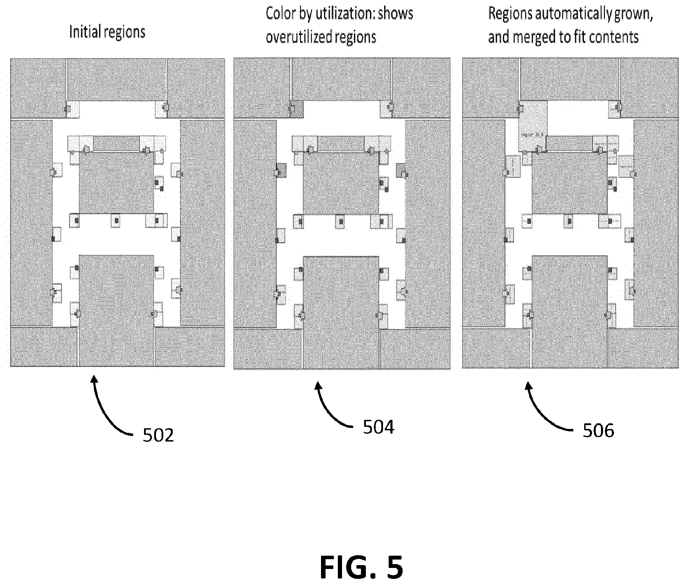

Referring now to FIG. 5, various floorplans 502, 504, and 506, which are various stages of a process executed, are displayed as progressions when using the tool that is executing a process for automatically growing regions and merging content in accordance with various aspects of the invention. The tool ensures that when units are constrained to be in a given region, the region's area is sufficient to contain all of the units, which have a certain size and density. The tool imports area information about network units, either from an early area estimation module or from a precise area report generated by a previous backend run. The tool provides visual information to indicate to the user the degree of utilization of regions, for example color coordinated (color labelled) regions by utilization. The tool automatically grows over-utilized regions. The tool then merges regions that overlap significantly, based on threshold parameters that are user-defined. When two regions are merged, the contents of both regions is now constrained by the new bigger region.

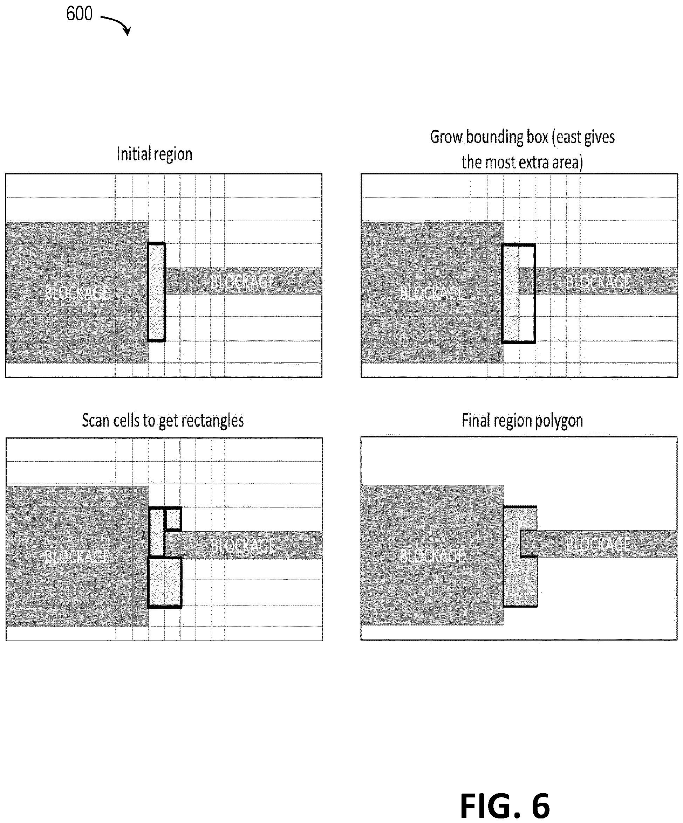

Referring now to FIG. 6, a process 600 used by a tool is shown for generating final regions in accordance with various aspects of the invention. The tool grows regions without ever overlapping blockages. The tool grows a region (e.g. to fill an area target) while ensuring regions do not overlap with blockages, and controllable overlap with other regions. The tool operates at the level of the floorplan grid. In accordance with various aspects of the invention, the floorplan is typically discretized into small cells, or nodes, given a resolution. Cells that are covered by a blockage are marked as "blocked", and cells that are covered by an existing region are tagged with the given region object. A single cell can be tagged with multiple regions. Each region is associated with a logical rectangular bounding box. Initially, the bounding box contains all the cells of the region. The tool grows a region by iteratively repeat the following:
1) Simulate growing the bounding box in each direction (east, west, south, north), one column or one row of floorplan cells at a time;
2) Compute, in each case, the effective new area, by computing the sum of the areas of the additional cells; excluding the blocked cells, and while dividing the area of cells that are tagged by other regions accordingly;
3) By growing the side that increases the area by the largest amount, the growth will tend to be in the direction that makes the region more "square"-shaped;
4) Select the direction that yields the largest growth and effectively grow the bounding box in the selected direction.
5) Tag the newly included cells with the region. The tool continues until the region reaches its target size.

In accordance with various aspects of the invention, once all regions have been grown using the above process, the tool performs an overlap check, where if the shared cell area between two regions exceeds a given threshold, the two regions are merged into one. To output the final region from its bounding box, the tool performs a scan of included cells and generate a multitude of rectangles comprising only valid cells. In accordance with various aspects of the invention, a simple bottom to top horizontal scan can be used to detect the rectangles. This way, complex shaped polygons are exported, that do not overlap blockages.

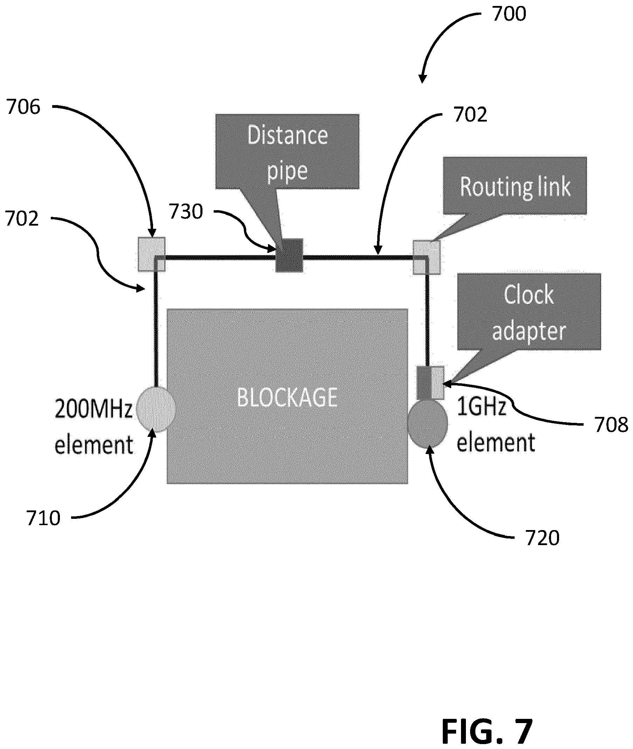

Referring now to FIG. 7, a process 700 used by the tool is shown in accordance with various aspects of the invention. For each segment in the network, the tool performs insertions of elements and routes (edges or links), which can be activated/deactivated and configured by the user. In accordance with various aspects of the invention, the tool inserts routing links 702. When wires are routed between two elements making up a segment, the route may be complex, i.e. involving many detours and corners. All of the timing analyses must be based on the full route. In order to make sure downstream tools follow the same route as the one computed by the tool, the tool first inserts an empty module 706 at every corner of the wire route in the routing link 702. This empty module 706 is part of the routing link 702. The routing link's module is constrained within a local region, so wires will follow the same paths in the downstream tool doing the placement and routing.

In accordance with various aspects of the invention, the tool inserts clock adapters 708. If the two elements of the segment have different clock domains, a clock adaptation module inserts a clock adapter in the segment from a source element 710 to the destination element 720, which may be a clock domain crossing in accordance with various aspects of the invention, The user may instruct the tool (or the tool may automatically determine using a machine learning model) to place the adapter 708 in the middle of the segment for balance or close to the faster clock, thereby extending the slower clock over a larger distance and ensuring less distance pipes are required.

In accordance with various aspects of the invention, the tool inserts distance pipes 730. The wire delay dictated by the technology settings, and the clock speeds, are used to compute the number of distance pipes that need to be inserted. The tool inserts distance pipes in a way that is evenly distributed along the segment.

In accordance with various aspects of the invention, the tool detects congestion regions. The tool splits the floorplan's usable space into regions. The split captures the floorplan channels as much as possible.

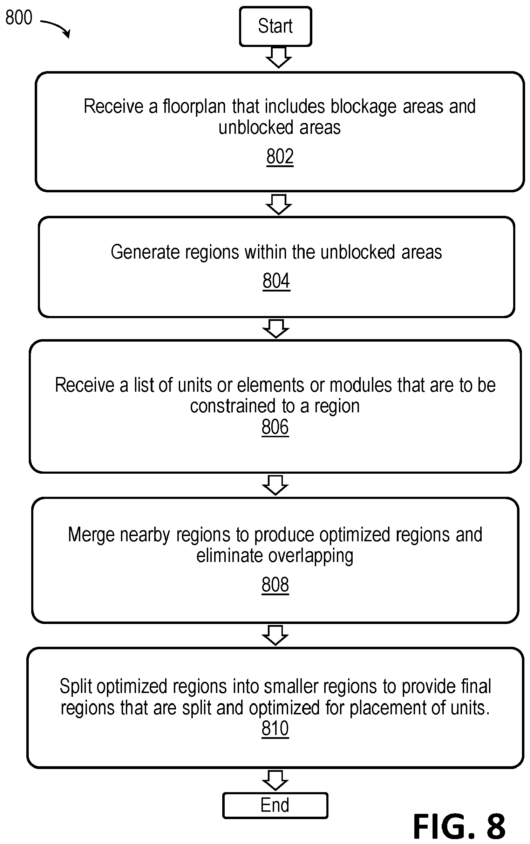

Referring now to FIG. 8, a process 800 is shown in accordance with the various aspects and embodiments of the invention. At step 802, the tool receives a floorplan with the blockage areas and the unblocked areas. At step 804, the tool generated regions within the unblocked areas, which regions may overlap and have different polygon shapes on the floorplan. At step 806, the tool receives a list of units and the regions the units will be contained within or constraint to for placement. At step 808, the tool merges nearby regions, including some regions that are overlapping, to generate near rectangular regions and remove overlapping of regions. As the regions are merged, the tool assigns the units to the correct merged region based on the initial containment/constraint requirement for the unit. At step 810, the tool splits larger regions into smaller regions for analysis and/or placement of units. The tool can provide a final region map on the floorplan that is optimized for placement of units and avoids blockage areas.

In accordance with various aspects of the invention, the tool address wire capacity data. From the metal layer information (pitch, orientation) provided in the technological parameters, the tool computes a maximum total number of horizontal and vertical wires that can be routed through each region. In accordance with various aspects of the invention, whenever a wire route is computed, the tool updates the horizontal/vertical wire usage of each of the congestion regions it traverses. In accordance with various aspects of the invention, the tool identifies and generates a congestion heatmap. The tool builds a heatmap for congestion region utilization in the graphical editor.

In accordance with various aspects of the invention, the tool provides custom congestion window. Since the automatic floorplan split into congestion channels may not capture the channels the user is interested in, the tool provides the user with the ability to define a custom region in the floorplan, for example by drawing a rectangle on the graphical view, for which congestion data is tracked and reported. The user can define as many windows as they want. This is powerful as the user is able to pin point the areas of interest where congestion issues may arise and avoids unnecessary book-keeping in the entire floorplan.

In accordance with the various aspects of the invention, initiators and targets are communicatively connected to the NoC. An initiator is a unit that sends requests. An initiator typically is configured to read and write commands. A target is a unit that serves or responds to the requests. A target typically is configured to read and write commands. Each initiator is attached to or connected to the NoC through a NIU. The NIU that is attached to an initiator is called an Initiator Network Interface Unit (INIU). Further, each target is attached to the NoC through an NIU. The NIU that is attached to a target is called a Target Network Interface Unit (TNIU). The primary functionality of the NoC is to carry each request from an initiator to the desired destination target, and if the request demands or needs a response, then the NoC carries each target's response to the corresponding requesting initiator. Initiators and targets have many different parameters that characterize them. In accordance with the various aspects of the invention, for each initiator and target, the clock domain and power domain they belong to are defined. The width of the data bus they use to send, write, and receive read payloads is a number of bits. In accordance with the various aspects of the invention, the width of the data bus for the connection (the communication path to/from a target) used to send, write requests, and receive write responses are also defined. Furthermore, the clock and power domain definition are a reference to the previously described clock and power domains existing in the SoC, as described herein.

In accordance with the various aspects of the invention, initiators are not required to be able to send requests to all targets or targets that are connected to the NoC. The precise definition of the target that can receive requests from an initiator is outlined or set forth in the connectivity table, such as table 400. The connectivity and traffic class labeling information can be represented as an explicit or conceptual matrix. Each initiator has a row and each target has a column. If an initiator must be able to send traffic to a target, a traffic class label must be present at the intersection between the initiator row and the target column. If no label is present at an intersection, then the tool does not need connectivity between that initiator and that target. In accordance with the various aspects of the invention, the actual format used to represent connectivity can be different, as long as each pair of initiator-target combination has a precise definition of its traffic class, or no classification label if there is no connection. It is within the scope of this invention for an initiator/target connection to support a plurality of traffic classes.

It is within the scope of this invention for latency to refer to the number of clock cycles it takes for data to make its way through the network. Latency causes problems in transport networks despite having a high-bandwidth (frequency). An example of a "real-time traffic class" would be video data from a camera in a self-driving car. It isn't acceptable to have long latency in the propagation of the data. If some data were lost it would make the vehicle unsafe. A still real-time but less vital traffic class would be for audio and/or video in the entertainment system. It would not be desirable to have a gap in that data, but not unsafe. An example of non-real-time data would be data from a gas gauge sensor in a car. If the data is delayed for several seconds, it is of no matter since the rate of change of the data is quite slow compared to the operating speed of an SoC.

In accordance with some aspects of the invention, scenarios are not defined for the tool, in which case the tool optimizes the NoC synthesis process for physical cost, such as lowest gate cost and/or lowest wire cost.

In accordance with various aspects of the invention, the tool handles the connectivity matrix with the following defined parameter or components:
- one network interface unit per initiator,
- one network interface unit per target,
- one switch is created per defined traffic class, called the main switch of the class,
- one switch after each initiator/initiator NIU that split traffic to the different main switches that this initiator needs to reach,
- one switch before each target/target NIU that merges traffic from the different main switches that are sending traffic to that target

The data width of each switch, and the clock domain it belongs to, is computed using the data width of each attached interface, and their clock domain, as inputs to the tool. In accordance with the various aspects of the invention, each step that transforms the network, which is part of the NoC, also performs the computation of the data width and the clock domain of the newly created network elements.

In accordance with various aspects of the invention, using the tool, each switch for each of the mergers in the main switch is decomposed further into a cascade of mergers, each merger of the cascade being placed on a branching point of the merger roadmap of the attached target. The branching point of the roadmap is defined by the fact that the path is being split into two or more branches. The process of decomposing a splitter in a cascade of splitters preserves the original splitter functionality, as the number of inputs to the cascade is still one, and the number of outputs of the cascade is identical to the number of outputs of the original splitter. The process of decomposing a merger in a cascade of mergers preserves the original merger functionality, as the number of outputs of the cascade is still one, and the number of inputs to the cascade is identical to the number of inputs to the original merger. In accordance with the various aspects of the invention, the effect of the process is to obtain a set of elementary switches, which are represented by the mergers and the splitters, that are physically placed close to where the actual connections between switches need to be.

In accordance with the various aspects of the invention, the tool transforms the network in order to reduce the number of wires used between switches achievable, while keeping the performance as defined in the scenarios, which are a set of required minimum throughput between initiator and target. In accordance with the various aspects of the invention switches are clustered for performance aware switching, mergers and splitters that have been distributed on the roadmaps are treated like ordinary switches.

In accordance with other aspects of the invention, extension of clock and power domains on the floorplan are provided and each element is tested to ensure it is located within the bounds of the specified clock and power domain. If the test fails, the element is moved until a suitable location is found where the test is passing. Once a suitable placement has been found for each element, a routing is done of each connection between elements. The routing process will find a suitable path for the set of wires making the connections between elements. After routing is done, distance-spanning pipeline elements are inserted on the links if required, using the information provided regarding the capabilities of the technology, based on how long it takes for a signal to cover a 1 mm distance.

In accordance with some aspects and embodiments of the invention, the tool generates one or more computer files describing the generated NoC that includes:
The list of network elements with their configuration: data width, clock domain.
The position of each generated network element on the floor plan.
The set of routes through the network elements implementing the connectivity. In accordance with the aspects of the invention, a route is an ordered list of network elements, one for each pair of (initiator, target) and one for each pair of (target, initiator). The route represents how traffic between the pairs will flow and through which elements.

In accordance with various aspects of the invention, the tool is used to generate metrics about the generated NoC, such as: histograms of wire length distribution, number of switches, histogram of switch by size.

In accordance with another aspect of the invention, the tool automatically inserts in the network various adapters and buffers. The tool inserts the adapters based on the adaptation required between two elements that have different data width, different clock and power domains. The tool inserts the buffers based on the scenarios and the detected rate mismatch.

In accordance with some aspects and embodiments, the tool can be used to ensure multiple iterations of the synthesis are done for incremental optimization of the NoC, which includes a situation when one constraint provided to the tool is information about the previous run.

After execution of the synthesis process by the software, the results are produced in a machine-readable form, such as computer files using a well-defined format to capture information. An example of such a format is XML, another example of such a format is JSON. The scope of the invention is not limited by the specific format.

In an embodiment, a mechanism for accommodating timing realization between a first component and a second component within a NoC, includes, but is not limited to, distance pipe insertion, adding buffer stages, switching buffers to higher drive or faster buffers, adjustments to wire widths, and/or indication to which wire layer(s) are being used.

It is within the scope of this invention for different mechanisms to be physically implemented to overcome timing issues within a synthesized topology, resolving timing issues prior to their occurrence by communicating constraints and/or guidance for the physical implementation. It is within the scope of this invention for physical implementation of a connection to include, but not be limited to, a physical placement of an object, a component and/or a gate around the NoC topology so that a downstream tool does not place a first connection at a great enough distance away from a second connection, so as to exceed a time restraint. It is more desirable to synthesize a network for all of the connections capable of satisfying connectivity requirements and to minimize the number of gates in the synthesized network. It is important to minimize the number of gates in the synthesized network for including, but not limited to, enabling the NoC to fit within the topology parameters; ensuring the timing requirement can be met; building more efficiently in smaller networks; and minimizing the overall power used in the interconnect between signals.

In another embodiment, components of the driving side are replaced with components having greater drive strength to increase speed. For example, when a signal is forwarded from a first switch to a second switch, the timing requirement is exceeded because the distance between the first switch and the second switch is too great, a distance pipe may be placed in between the first switch and the second switch or the drive strength may be increased to make the signal faster by using larger wires having a lower resistance to reduce the parasitic elements on the particular line.

In an embodiment, a floorplan region is a mechanism capable of including, but not limited to; constraining a component, such as a switch and/or a distance pipe stage to a physical location and/or an approximate physical location; and/or dividing a logical interconnect into a plurality of portions that are tuned to the size of the downstream tools for proper synthesis. The physical and logical configuration of the interconnects are configured together to form a logical interconnect. The floorplan regions are used to constrain a component to a particular location. The need for a floorplan region is a response to the increasing size of the network or interconnect of SoCs that are being developed. In other words, the network or interconnect of SoCs have grown larger than downstream implementation tools capacity including, but not limited to, the addition of wider interconnects and/or more components being interconnected.

In accordance with various aspects of the invention, it may be more desirable to have a switch in a particular constrained location, based on the data associated with signals being received and transmitted by the switch, because the performance of the switch may be adversely affected if the switch was moved to a location out of the constrained location.

In accordance with various aspects of the invention, an additional constraint may be utilized to place, for example, gates of a component for a switch or a pipe stage, as close together as possible within each individual component. A current problem in existing placement programs is their tendency to place components too far away from each other. It is within the scope of this invention for a switch being a single component having a plurality of gates, with each gate having a need to be placed. Although the netlist facilitates the interconnection of these components, the downstream tools physically place the components and make the routes to connect the logical connectivity specified.

In accordance with various aspects of the invention, the two separate constraints of the first aspect and the second aspect may be used simultaneously. For example, if a switch that is specified to have a particular performance has the components of that switch distributed over a larger area than specified, the switch will have a lower performance than originally specified. Thus, it would be more desirable to keep components of this switch close together, to each other. Further, based on a larger network, it is more desirable to keep components within a particular region or area of the floorplan free space so that the overall network will perform as specified or analyzed.

In an embodiment, approximations in a given semiconductor process, a maximum length of a single wire is established to ensure that the overall timing of that particular path can be met. Further, it is an important aspect to move from a first component to a second component within a given amount of time. Due to an excessive length between a first component and a second component it may not be achievable to move a signal from the first component to the second component within the given amount of time. As a result, the need for the technical solution of an insertion of distance pipe stages would solve this technical problem, as compared to current techniques.

In accordance with various aspects of the invention, receiving an area-estimation for the first component and the second component, and balancing the timing and other performance requirements in the optimization of the NoC so as to ensure the resulting NoC gates will be placeable, that is, they will fit into the free space in the floorplan allotted to the NoC.

In accordance with various aspects of the invention, further receiving a power requirement for the NoC, and balancing the timing and other performance requirements in the optimization of the NoC so as to ensure the resulting NoC will not exceed the power requirement specified in the constraint.

In accordance with various aspects of the invention, further incorporating physical routing congestion data, either as an estimation based on the NoC netlist structure, or obtained as feedback from the downstream implementation tools, and balancing the timing and other performance requirements in the optimization of the NoC so as to ensure the resulting NoC will be routable in the free space in the floorplan allotted to the NoC.

In accordance with some aspects of the invention, a method is disclosed for guiding physical generation of a NoC. The tool, which may include a machine learning model that is trained and receives feedback, receives at least one constraint parameter for the NoC, the at least one constraint parameter is selected from a group of constraint parameters including at least one physical constraint and at least one performance constraint; augmenting, using the tool, a physical floorplan for the NoC with information that guides a physical implementation of the NoC; and constraining, using the physical floorplan, the physical implementation of a connection to a location on the physical floorplan based on the at least one constraint parameter.

Certain methods according to the various aspects of the invention may be performed by instructions that are stored upon a non-transitory computer readable medium. The non-transitory computer readable medium stores code including instructions that, if executed by one or more processors, would cause a system or computer to perform steps of the method described herein. The non-transitory computer readable medium includes: a rotating magnetic disk, a rotating optical disk, a flash random access memory (RAM) chip, and other mechanically moving or solid-state storage media. Any type of computer-readable medium is appropriate for storing code comprising instructions according to various examples.

Certain examples have been described herein and it will be noted that different combinations of different components from different examples may be possible. Salient features are presented to better explain examples; however, it is clear that certain features may be added, modified and/or omitted without modifying the functional aspects of these examples as described.

Various examples are methods that use the behavior of either or a combination of machines. Method examples are complete wherever in the world most constituent steps occur. For example, and in accordance with the various aspects and embodiments of the invention, IP elements or units include: processors (e.g., CPUs or GPUs), RAM - e.g., off-chip dynamic RAM or DRAM, a network interface for wired or wireless connections such as ethernet, Wi-Fi, 3G, 4G long-term evolution (LTE), 5G, and other wireless interface standard radios. The IP may also include various I/O interface devices, as needed for different peripheral devices such as touch screen sensors, geolocation receivers, microphones, speakers, Bluetooth peripherals, and USB devices, such as keyboards and mice, among others. By executing instructions stored in RAM devices processors perform steps of methods as described herein.

Some examples are one or more non-transitory computer readable media arranged to store such instructions for methods described herein. Whatever machine holds non-transitory computer readable media comprising any of the necessary code may implement an example. Some examples may be implemented as: physical devices such as semiconductor chips; hardware description language representations of the logical or functional behavior of such devices; and one or more non-transitory computer readable media arranged to store such hardware description language representations. Descriptions herein reciting principles, aspects, and embodiments encompass both structural and functional equivalents thereof. Elements described herein as coupled have an effectual relationship realizable by a direct connection or indirectly with one or more other intervening elements.

Practitioners skilled in the art will recognize many modifications and variations. The modifications and variations include any relevant combination of the disclosed features. Descriptions herein reciting principles, aspects, and embodiments encompass both structural and functional equivalents thereof. Elements described herein as "coupled" or "communicatively coupled" have an effectual relationship realizable by a direct connection or indirect connection, which uses one or more other intervening elements. Embodiments described herein as "communicating" or "in communication with" another device, module, or elements include any form of communication or link and include an effectual relationship. For example, a communication link may be established using a wired connection, wireless protocols, near-field protocols, or RFID.

To the extent that the terms "including", "includes", "having", "has", "with", or variants thereof are used in either the detailed description and the claims, such terms are intended to be inclusive in a similar manner to the term "comprising."

The scope of the invention, therefore, is not intended to be limited to the exemplary embodiments shown and described herein. Rather, the scope and spirit of present invention is embodied by the appended claims.

## Claims

1. A method for guiding physical generation of a network-on-chip (NoC), the method comprising:
receiving a floorplan with blockage areas and unblocked areas;
generating a plurality of regions within the unblocked areas;
receiving list of units that are to be constrained to a first region selected from the plurality of regions;
merging the first region to capture at least a portion of nearby regions of the plurality of regions that overlap with the first region to produce an optimized first region;
splitting the optimized first region into smaller regions that meet a threshold region size to contain required unit and reduce congestion; and
providing a final region with utilization data that is optimized for the final region.

2. The method of claim 1, wherein the final region is a polygon shaped region that avoids the blockage areas.

3. A design tool for generating a network-on-chip (NoC) topology within a floorplan, the tool comprising a region builder unit that allows generation of a polygon shaped regions that avoid blockage areas in the floorplan and optimize each region.
